# FASCICULE DE BREVET EUROPEEN

(11) **EP 1 996 052 B1**
(45) Date de publication et mention de la délivrance du brevet: **11.04.2012**
(21) Numéro de dépôt: 07731192.6
(22) Date de dépôt: 23.03.2007
(51) Int. Cl.: A47J 36/06, A47J 37/10, A47J 27/21

(54) **COUVERCLE D'ARTICLE CULINAIRE AVEC JONC EN SILICONE**
ABDECKUNG FÜR EINEN KÜCHENARTIKEL MIT SILIKONDICHTUNG
COVER FOR CULINARY ARTICLE WITH SILICONE GASKET

(30) Priorité: 23.03.2006 FR 0602537
(43) Date de publication de la demande: 03.12.2008
(73) Titulaire: SEB SA, 69130 Ecully (FR)
(72) Inventeur: BERGERET, Nathalie, F-73100 Aix-Les-Bains (FR); LORTHIOIR, Christophe, F-74150 Bloye (FR); CUILLERY, Pascal, F-74210 Faverges (FR)
(74) Mandataire: Lemoine, Jean-Sébastien
(86) Numéro de dépôt international: PCT/FR2007/000505
(87) Numéro de publication internationale: WO 2007/107656

(56) Documents cités:
- EP-A1- 1 157 648
- FR-A1- 2 789 285
- GB-A- 2 302 263

## Description

La présente invention concerne un couvercle d'article culinaire, par exemple un couvercle de casserole.

On connaît, d'après la demande de brevet GB 2 302 263, un couvercle d'article culinaire du type comprenant un capot adapté à recouvrir l'article culinaire et un jonc en silicone ceinturant le capot. Dans ce document, le jonc est en fait un joint d'épaisseur relativement constante qui ne fait qu'envelopper la périphérie du capot.

La présente invention vise à réaliser un couvercle dont le jonc permet d'intégrer des nouvelles fonctionnalités dans le couvercle, ainsi que dans le jonc.

Selon l'invention, qui est définie par la revendication 1, le jonc est surmoulé autour du capot, et dans la direction radiale, le jonc s'étend au-delà de la périphérie du capot sur au moins 10 mm .

Ainsi, du fait de sa surface propre aussi importante, il est possible d'y réaliser des ouvertures pour le passage de la vapeur ou d'un équipement quelconque, et ceci sans apporter de modification au capot du couvercle.

D'autres particularités et avantages apparaîtront dans la description des six modes de réalisation donnés à titre d'exemples non limitatifs et illustrés aux dessins dans lesquels :
La figure 1 est une vue de dessous en perspective d'un couvercle (sans organe de préhension) conforme à un premier mode de réalisation de la présente invention ;
La figure 2 est une vue en coupe de l'extrémité radiale du couvercle illustré à la figure 1 ;
La figure 3 est une vue schématique en perspective d'un couvercle conforme à un second mode de réalisation de la présente invention, le couvercle reposant sur un article culinaire ;
La figure 4 est une vue schématique en coupe de l'extrémité radiale d'un couvercle conforme à un troisième mode de réalisation de la présente invention, le couvercle reposant sur un article culinaire ;
La figure 5 est une vue similaire à la figure 4, le couvercle étant conforme à un quatrième mode de réalisation de la présente invention ;
La figure 6 est une vue en coupe d'un ensemble d'ustensiles culinaires comprenant un couvercle conforme cinquième mode de réalisation de la présente invention ;
La figure 7 est une vue schématique en perspective d'un couvercle conforme à un sixième mode de réalisation de la présente invention, le couvercle reposant sur un article culinaire ;
La figure 8 est une vue similaire à la figure 5, le couvercle étant conforme à un septième mode de réalisation de la présente invention ; et
La figure 9 est une vue en perspective d'un couvercle conforme à un huitième mode de réalisation de la présente invention.

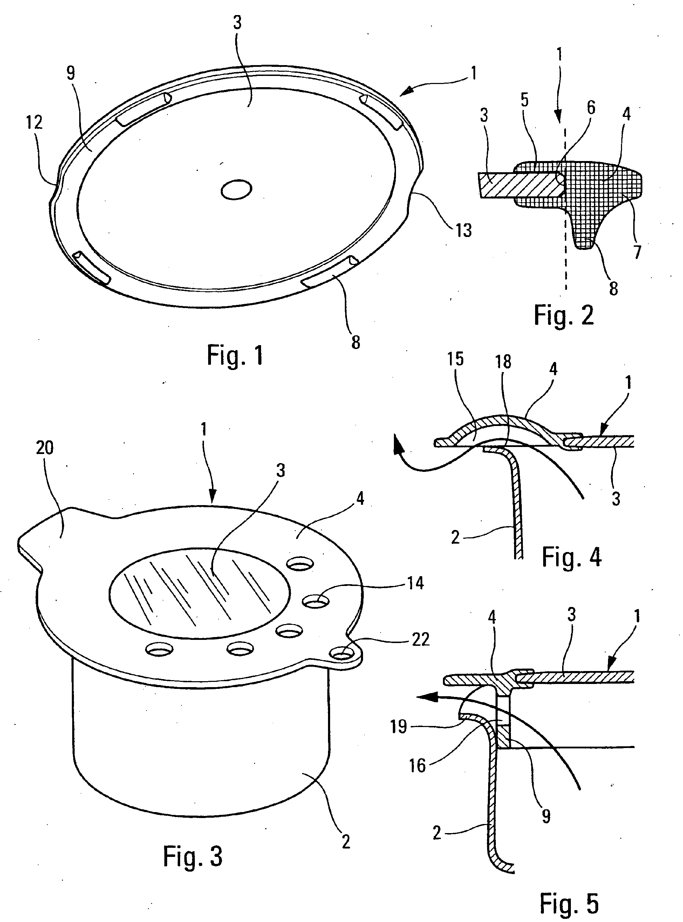

Comme on peut le voir aux figures 1 à 9, un couvercle 1 pour un article culinaire 2 comprend, d'une part, un capot 3 (par exemple en verre) qui forme la pièce principale de couvercle 1 et qui est adapté à recouvrir l'article culinaire 2, et, d'autre part, un jonc 4 qui ceinture le capot 3. Dans la présente invention, le jonc 4 est en silicone et est réalisé lors d'une opération de surmoulage du capot 3. Comme on peut le voir à la figure 2, le jonc 4 comprend, selon la direction radiale, deux portions : une portion de recouvrement 5 dans laquelle il recouvre une partie du capot 3 (la portion de recouvrement 5 s'étend radialement jusqu'à la périphérie 6 du capot 3) et une portion de prolongement 7 qui ne recouvre aucune partie du capot 3 (la portion de prolongement 7 est disposée au-delà de la périphérie 6 du capot 3).

Selon la présente invention, dans la direction radiale, le jonc 4 s'étend au-delà de la périphérie 6 du capot 3 sur au moins 10 mm ; c'est-à-dire, sur la majorité de sa périphérie (angulairement parlant), la portion de prolongement 7 a dans la direction radiale une dimension au moins égale à 10 mm.

Par ailleurs, le jonc 4 comprend des moyens de centrage 8,9,10,11 permettant de centrer le couvercle 1 sur l'article culinaire 2.

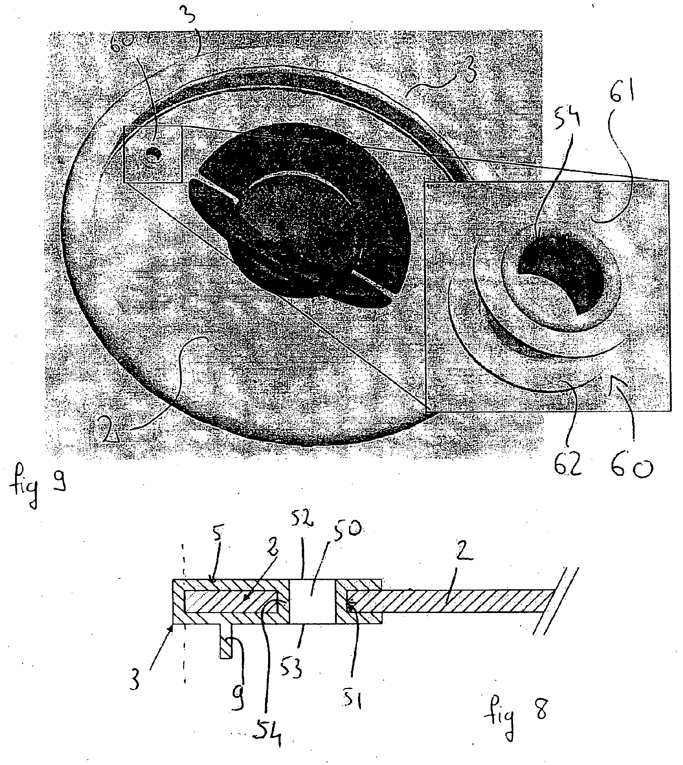

Dans les modes de réalisation illustrés aux figures 1, 2, 5 et 8, ces moyens de centrage 8,9 sont formés par des parois tombantes 8,9. De façon plus précise, dans le mode de réalisation des figures 1 et 2, les moyens de centrage 8 sont formés par des (en l'occurrence quatre) plots de centrage 8 qui sont réparties sur la périphérie du jonc 4 et qui ne s'étendent que selon de faibles secteurs angulaires. Dans le mode de réalisation illustré aux figures 5 et 8, les moyens de centrage 9 sont formés par une paroi annulaire 9 qui s'étend sur toute la périphérie du jonc 4.

Dans les modes de réalisation illustrés aux figures 2 et 5, les parois tombantes 8,9, dans la direction radiale, s'étendent au-delà de la périphérie 6 du capot 3 : ils sont portés au moins partiellement (ici intégralement) par la portion de prolongement 7. Dans le mode de réalisation illustré à la figure 8, la paroi tombante 9, dans la direction radiale, s'étend face au capot 3 : ils sont portés au moins partiellement (ici intégralement) par la portion de recouvrement 5.

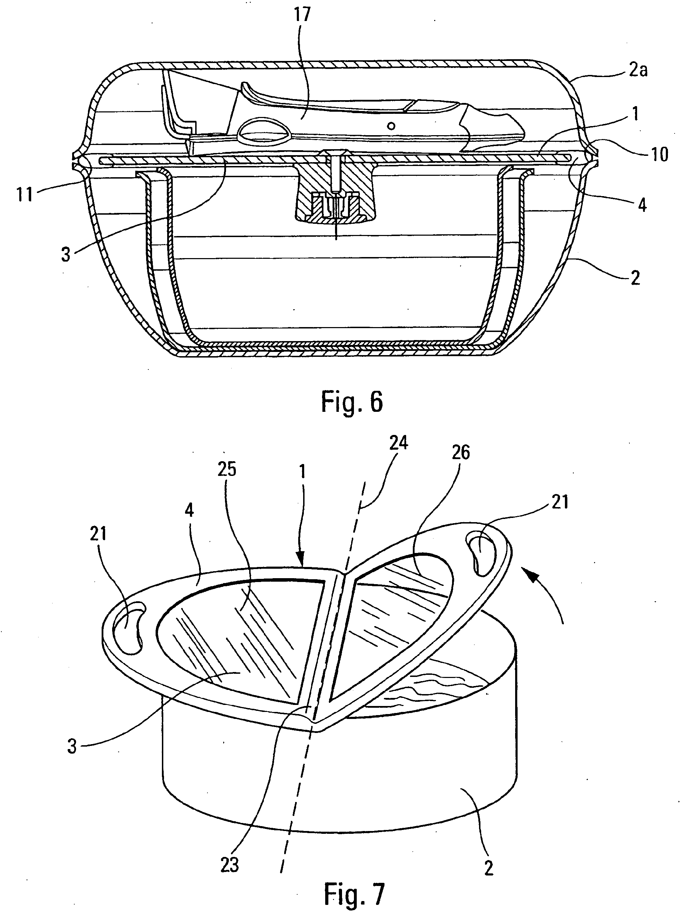

Le mode de réalisation de la figure 6 illustre des moyens de centrage 10,11 qui sont formés, non pas par des parois tombantes, mais par la périphérie du jonc 4. En outre, dans ce mode de réalisation, le jonc 4 comprend des moyens de centrage 10,11 sur les deux faces du couvercle 1, ce qui permet de ranger en vis-à-vis deux articles culinaires 2,2a dont les rebords périphériques ont des dimensions correspondants aux moyens de centrage 10,11 des deux faces du couvercle (dans le présent mode de réalisation, les moyens de centrage 10,11 des deux faces sont identiques).

Du fait de l'importante dimension de la portion de prolongement 7 du jonc 4, il est possible que ce dernier supporte les moyens de centrage 8,9,10,11, et, comme dans les modes de réalisation illustré aux figures 1 à 5, des ouvertures 12,13,14,15,16. Dans le mode de réalisation illustré à la figure 1, le jonc 4 définit, d'une part un passage 12 pour un équipement de préhension amovible 17 (cf. figure 6) ou pour un ustensile tel qu'une spatule, et, d'autre part, un passage 13 pour l'évacuation de la vapeur. Dans ce mode de réalisation, les deux passages 12,13 sont des ouvertures 12,13 définies par la circonférence du jonc 4 : elles sont formées, chacune, par un dégagement 12,13 réalisé dans le jonc 4 (ce qui entraîne une faible dimension de la portion de prolongement 7 dans cette portion angulaire du jonc 4). Pour que ces passages 12,13 soient utiles, leur dégagement 12,13 s'étend radialement vers l'intérieur du couvercle 1 jusqu'à dépasser les moyens de centrage 8. Dans le mode de réalisation illustré à la figure 3, la portion de prolongement 7 du jonc 4 (plus précisément, la partie radiale de la portion de prolongement 7 située plus à l'intérieur que les moyens de centrage 8, de sorte que la vapeur puisse s'échapper de l'article culinaire 2) comprend des passages d'évacuation de vapeur 14 (en l'occurrence cinq) formées par des orifices 14, c'est-à-dire des ouvertures dont le périmètre est fermé. A la figure 4, le passage d'évacuation de vapeur 15 est formée par un bossage 15 réalisé ponctuellement dans la portion de prolongement 7 du jonc 4, au niveau de l'extrémité supérieure 18 de la paroi latérale de l'article culinaire 2. A la figure 5, le passage d'évacuation de vapeur 16 est formée par un orifice 16 réalisé dans la paroi tombante 9 portée par le jonc 4 qui forme moyen de centrage. Cet orifice 16 est formé dans la partie supérieure de la paroi tombante 9, au niveau faisant face à un bec verseur 19 de la paroi latérale de l'article culinaire 2. Cette coopération particulière de la paroi tombante, de l'orifice 16 et du bec verseur 19 permet une utilisation pour permettre aussi bien l'évacuation de la vapeur que l'égouttage d'aliments.

Une autre conséquence de la dimension radiale de la portion de prolongement est illustrée aux figures 3 et 7 où les organes de préhension 20,21 du couvercle 1 sont portés par le jonc 4. De plus, dans ces modes de réalisation, les organes de préhension 20,21 sont réalisés dans l'épaisseur du jonc 4, ce qui permet de réduire considérablement l'épaisseur du couvercle 1 et éliminer le problème de son empilement avec d'autres couvercles, voire de s'en servir comme dessous de plat. Dans le mode de réalisation illustré à la figure 3, l'organe de préhension 20 est formé par une languette 20 faisant partie intégrante du jonc 4 (monobloc) et s'étendant radialement bien au-delà de l'article culinaire 2 auquel le couvercle 1 est associé. Dans le mode de réalisation illustré à la figure 7, l'organe de préhension 21 (ici, le couvercle 1 possède deux organes de préhension 21) est formé par une anse 21 faisant également partie intégrante du jonc 4 (monobloc) et s'étendant radialement également bien au-delà de l'article culinaire 2 auquel le couvercle 1 est associé.

De plus, dans le mode de réalisation illustré à la figure 3, le jonc 4 porte une ouverture d'accrochage 22 qui est réalisée radialement au-delà de l'article culinaire 2 auquel le couvercle 1 est associé, et permettant de fixer le couvercle 1 à un dispositif d'accrochage (par exemple, un crochet).

Par ailleurs, dans le mode de réalisation illustré à la figure 7, le capot 2 comprend une articulation 23 qui définit un axe d'articulation 24 et qui s'étend axialement, des deux côtés, jusqu'au jonc 4. L'articulation 23 délimite avec le jonc 4 deux organes de recouvrement 25,26 du capot 2 qui forment ainsi des demi-capots 25,26. Dans ce mode de réalisation, l'articulation 24 est monobloc avec le jonc 4 de sorte que chaque organe de recouvrement 25,26 est ceinturé par la partie du jonc 4 qui lui est adjacente et par l'articulation 24, à la manière d'un jonc 4,24 qui lui serait propre. Selon ce mode de réalisation, il est possible de plier le couvercle 1 pendant son utilisation, par exemple pour visualiser les aliments en train de cuire ou pour les brasser, sans connaître les désagréments liés à l'enlèvement du couvercle 1 (gouttes du condensa, encombrement du couvercle 1 chaud hors de l'article culinaire 2). Du fait de l'articulation 24, le couvercle 1 peut être rangé à plat ou plié, et du fait de l'utilisation d'un jonc 4 portant des anses de préhension 21 réalisées dans son épaisseur (une par organe de recouvrement 25,26), en position plié, l'encombrement est limitée. Dans le présent exemple, chaque organe de recouvrement 25,26 est en verre, mais ils pourraient être chacun fait dans une matière différente (par exemple, l'un en verre, l'autre en inox).

Dans le mode de réalisation illustré à la figure 8, au moins un passage 50 (en l'occurrence un) est réalisé dans une portion de recouvrement 5 du jonc 4. Le passage 50 est le prolongement d'une ouverture 51 réalisée dans le capot 3, et il débouche par deux orifices 52,53 qui sont disposés de part et d'autre du capot 3 de façon à permettre l'échappement de la vapeur. De plus, dans ce mode de réalisation, le jonc 4 comprend une paroi tubulaire 54 (en l'occurrence pleine) rejoignant entre eux les deux orifices 52,53 en traversant l'ouverture 51 réalisée dans le capot 3, de façon à former l'ouverture d'échappement de la vapeur. Cette paroi tubulaire 54, en encapsulant l'ouverture 51, permet de masquer les défaut du au perçage du capot 3 (notamment quand il est en verre). De plus, cette paroi tubulaire 54 qui est partie intégrante (et monobloc) du jonc 4 en silicone forme également un élément de fixation mécanique supplémentaire du jonc en silicone au capot, notamment quand ce dernier est en verre.

La présente invention n'est pas limitée aux modes de réalisation illustrés aux figures.

Il serait par ailleurs possible que le jonc comprenne une ouverture d'évacuation de vapeur associée à un volet flexible porté par le jonc (de préférence monobloc) mobile entre une position d'ouverture dans laquelle il découvre le passage et une position de fermeture dans laquelle il l'obstrue. Pour des raisons pratiques, la réalisation d'une telle soupape peut se faire ne n'effectuant un perçage que sur un secteur angulaire d'environ un demi-tour.

Il serait aussi possible de réaliser un dispositif de préhension surmoulé dans le jonc en silicone.

L'utilisation d'un jonc conforme à la présente invention permet également de maintenir de façon rigide deux organes de recouvrement (demi-capots) de matière différente (par exemple en verre et en inox), le couvercle ne comprenant pas d'articulation.

Il serait également possible d'avoir, indépendamment du jonc en silicone, comme on peut le voir à la figure 9, un rivet 60 en silicone employé de la même façon que la paroi tubulaire 54, et associé à une ouverture réalisée dans e capot 3 pour l'évacuation de la vapeur. Ce rivet 60 permet de masquer les défaut du au perçage du capot 3. Le rivet 60 comprend outre la paroi tubulaire encapsulant l'ouverture 51, deux parois latérales 61,62 disposées de part et d'autre du capot 3 améliorant sa fixation au capot 3. Un tel rivet en silicone pourrait être employé indépendamment, ou être intégré à tout type de jonc, et notamment, faire partie intégrante d'un jonc en silicone que ce jonc s'étende au-delà de la périphérie du capot sur au moins 10 mm, ou non, ou qu'il présente ou non l'une des caractéristiques citées en liaison avec les modes de réalisation précédemment décrits.

## Revendications

1. Couvercle (1) d'article culinaire (2) comprenant un capot (3) adapté à recouvrir l'article culinaire (2) et un jonc (4) en silicone ceinturant le capot (3), **caractérisé en ce que** le jonc (4) est surmoulé autour du capot (3) et, dans la direction radiale, le jonc (4) s'étend au-delà de la périphérie (6) du capot (3) sur au moins 10 mm.

2. Couvercle (1) selon la revendication 1, **caractérisé en ce que** le jonc (4) comprend des moyens de centrage (8,9,10,11) du couvercle (1) sur l'article culinaire (2).

3. Couvercle (1) selon la revendication 2, **caractérisé en ce que**, dans la direction radiale, les moyens de centrage (8,9,10,11) s'étendent au-delà de la périphérie (6) du capot (3).

4. Couvercle (1) selon la revendication 2 ou 3, **caractérisé en ce que** le jonc (4) comprend des moyens de centrage (10,11) sur les deux faces du couvercle (1) .

5. Couvercle (1) selon l'une des revendications 2 à 4, **caractérisé en ce que** les moyens de centrage (10, 11) sont formés par le rebord périphérique du jonc (4).

6. Couvercle (1) selon l'une des revendications 2 à 4, **caractérisé en ce que** les moyens de centrage (8, 9) sont formés par des parois tombantes (8,9) portées par le jonc (4).

7. Couvercle (1) selon l'une des revendications 1 à 6, **caractérisé en ce qu'**au moins un passage (12,13,1.4,15,16,21,50) est réalisé dans le jonc (4).

8. Couvercle selon la revendication 7, **caractérisé en ce que** le passage (50) est réalisé dans une portion de recouvrement (5) du jonc (4) qui s'étend radialement jusqu'à la périphérie (6) du capot (3), le passage (50) qui prolonge une ouverture (51) réalisée dans le capot (3), débouchant par deux orifices (52,53) qui sont disposés de part et d'autre du capot (3) de façon à permettre l'échappement de la vapeur.

9. Couvercle selon la revendication 8, **caractérisé en ce que** le jonc (4) comprend une paroi tubulaire (54) pleine rejoignant entre eux les deux orifices (52,53) en traversant l'ouverture (51) réalisée dans le capot (3), de façon à former l'ouverture d'échappement de la vapeur.

10. Couvercle (1) selon l'une des revendications 7 à 9, **caractérisé en ce que** le passage (12,13,14,15,16,21) est réalisé dans une portion de prolongement (7) du jonc (4) qui s'étend radialement s'étend au-delà de la périphérie (6) du capot (3).

11. Couvercle (1) selon la revendication 10 dépendante d'une des revendications 2 à 6, **caractérisé en ce que** le passage (12,13) est formé par un dégagement réalisé dans la portion de prolongement (7) qui pénètre radialement plus à l'intérieur que les moyens de centrage (8,9,10,11) de façon à permettre l'échappement de la 1 vapeur.

12. Couvercle (1) selon la revendication 10 ou 11 dépendante d'une des revendications 2 à 6, **caractérisé en ce que** le passage (14) est formé par un orifice réalisé dans la portion de prolongement (7), radialement plus à l'intérieur que les moyens de centrage (8,9,10,11), de façon à permettre l'échappement de la vapeur.

13. Couvercle (1) selon l'une des revendications 10 à 12 dépendante de la revendication 6, **caractérisé en ce que** le passage (16) est formé par un orifice réalisé dans la paroi tombante (9).

14. Couvercle (1) selon l'une des revendications 10 à 13, **caractérisé en ce qu'**au moins un passage (15) est formé par un bossage réalisé dans la portion de prolongement (7) au niveau d'une paroi latérale de l'article culinaire (2) associé au couvercle (1).

15. Couvercle (1) selon l'une des revendications 7 à 13, **caractérisé en ce que** le jonc (4) comprend un volet flexible associé audit passage, lequel permet l'échappement de vapeur et est mobile entre une position d'ouverture dans laquelle il découvre le passage et une position de fermeture dans laquelle il l'obstrue.

16. Couvercle (1) selon l'une des revendications 1 à 15, **caractérisé en ce qu'**il comprend des organes de préhension (20,21) portés par le jonc (4).

17. Couvercle (1) selon la revendication 16, **caractérisé en ce que** les organes de préhension (20,21) sont réalisés dans l'épaisseur du jonc (4).

18. Couvercle (1) selon l'une des revendications 1 à 17, **caractérisé en ce que** le capot (3) comprend une articulation (23) qui définit un axe d'articulation (24) et qui s'étend axialement, des deux côtés, jusqu'au jonc (4).

19. Ensemble comprenant le couvercle (1) selon l'une au moins des revendications 2 à 6 et l'article culinaire (2) que recouvre ce couvercle (1), lequel y est centré par lesdits moyens de centrage (8,9,10,11).

20. Ensemble comprenant le couvercle (1) selon l'une au moins des revendications 7 à 15 et l'article culinaire (2) que recouvre ce couvercle (1) dont ledit passage (13, 14, 15, 16, 50) assure alors une communication entre l'intérieur de l'article culinaire et l'extérieur.

## Claims

1. Cover (1) for a culinary article (2) comprising a cap (3) adapted to cover the culinary article (2) and a silicone gasket (4) running around the cap (3), **characterized in that** the gasket (4) is moulded onto the cap (3) and, in the radial direction, the gasket (4) extends at least 10 mm beyond the periphery (6) of the cap (3).

2. Cover (1) according to Claim 1, **characterized in that** the gasket (4) comprises means (8,9,10,11) for centring the cover (1) on the culinary article (2).

3. Cover (1) according to Claim 2, **characterized in that**, in the radial direction, the centring means (8, 9, 10, 11) extend beyond the periphery (6) of the cap (3).

4. Cover (1) according to Claim 2 or 3, **characterized in that** the gasket (4) comprises centring means (10,11) on both sides of the cover (1).

5. Cover (1) according to any one of Claims 2 to 4, **characterized in that** the centring means (10,11) are formed by the peripheral rim of the gasket (4).

6. Cover (1) according to any one of Claims 2 to 4, **characterized in that** the centring means (8,9) are formed by downwardly extending walls (8, 9) carried by the gasket (4).

7. Cover (1) according to any one of Claims 1 to 6, **characterized in that** at least one passage (12,13,14,15,16,21,50) is formed in the gasket (4).

8. Cover according to Claim 7, **characterized in that** the passage (50) is formed in an overlapping portion (5) of the gasket (4) that extends radially as far as the periphery (6) of the cap (3), the passage (50), which extends an opening (51) formed in the cap (3), discharging via two orifices (52,53) that are disposed on either side of the cap (3) to allow steam to escape.

9. Cover according to Claim 8, **characterized in that** the gasket (4) comprises a solid tubular wall (54) joining together the two orifices (52,53) and passing through the opening (51) formed in the cap (3), to form the steam escape opening.

10. Cover (1) according to any one of Claims 7 to 9, **characterized in that** the passage (12,13,14,15,16,21) is formed in an extension portion (7) of the gasket (4) that radially extends beyond the periphery (6) of the cap (3).

11. Cover (1) according to Claim 10 when dependent on any one of Claims 2 to 6, **characterized in that** the passage (12,13) is formed by an indentation formed in the extension portion (7) that penetrates farther inward radially than the centring means (8,9,10,11) to allow steam to escape.

12. Cover (1) according to Claim 10 or 11 when dependent on any one of Claims 2 to 6, **characterized in that** the passage (14) is defined by an orifice formed in the extension portion (7), radially farther in than the centring means (8,9,10,11), to allow steam to escape.

13. Cover (1) according to any one of Claims 10 to 12 when dependent on Claim 6, **characterized in that** the passage (16) is formed by an orifice formed in the downwardly extending wall (9).

14. Cover (1) according to any one of Claims 10 to 13, **characterized in that** at least one passage (15) is formed by a boss formed in the extension portion (7) at the level of a lateral wall of the culinary article (2) associated with the cover (1).

15. Cover (1) according to any one of Claims 7 to 13, **characterized in that** the gasket (4) comprises a flexible flap associated with said passage that allows steam to escape and is mobile between an open position in which it uncovers the passage and a closed position in which it blocks it.

16. Cover (1) according to any one of Claims 1 to 15, **characterized in that** it comprises holding members (20,21) carried by the gasket (4).

17. Cover (1) according to Claim 16, **characterized in that** the holding members (20,21) are formed within the thickness of the gasket (4).

18. Cover (1) according to any one of Claims 1 to 17, **characterized in that** the cap (3) comprises an articulation (23) that defines an articulation axis (24) and extends axially as far as the gasket (4) on both sides.

19. Combination comprising the cover (1) according to at least one of Claims 2 to 6 and the culinary article (2) that this cover (1) covers, which is centred thereon by said centring means (8,9,10,11).

20. Combination comprising the cover (1) according to at least one of Claims 7 to 15 and the culinary article (2) that this cover (1) covers, the passage (13,14,15,16,50) of which then providing communication between the interior and the exterior of the culinary article.

## Patentansprüche

1. Abdeckung (1) für einen Kochartikel (2) mit einer Haube (3), zum Abdecken des Kochartikels (2) und einer die Haube (3) ringförmig umschließende Silikonleiste (4), **dadurch gekennzeichnet, dass** die Leiste (4) um die Haube (3) herum angeformt ist und sich die Leiste (4) in radialer Richtung über den Umfang (6) der Haube (3) um wenigstens 10 mm hinaus erstreckt.

2. Abdeckung (1) nach Anspruch 1, **dadurch gekennzeichnet, dass** die Leiste (4) Mittel zur Zentrierung (8, 9, 10, 11) der Abdeckung (1) auf dem Kochartikel (2) umfasst.

3. Abdeckung (1) nach Anspruch 2, **dadurch gekennzeichnet, dass** sich die Zentrierungsmittel (8, 9, 10, 11) in radialer Richtung über den Umfang (6) der Haube (3) hinaus erstrecken.

4. Abdeckung (1) nach Anspruch 2 oder 3, **dadurch gekennzeichnet, dass** die Leiste (4) Mittel zur Zentrierung (10, 11) auf den zwei Flächen der Abdeckung (1) umfasst.

5. Abdeckung (1) nach einem der Ansprüche 2 bis 4, **dadurch gekennzeichnet, dass** die Zentrierungsmittel (10, 11) durch den Umfangsrand der Leiste (4) gebildet sind.

6. Abdeckung (1) nach einem der Ansprüche 2 bis 4, **dadurch gekennzeichnet, dass** die Zentrierungsmittel (8, 9) durch von der Leiste (4) getragene, hängende Wände (8, 9) gebildet sind.

7. Abdeckung (1) nach einem der Ansprüche 1 bis 6, **dadurch gekennzeichnet, dass** wenigstens ein Durchgang (12, 13, 14, 15, 16, 21, 50) in der Leiste (4) ausgebildet ist.

8. Abdeckung nach Anspruch 7, **dadurch gekennzeichnet, dass** der Durchgang (50) in einem Abdeckbereich (5) der Leiste (4) ausgebildet ist, der sich radial bis zu dem Umfang (6) der Haube (3) erstreckt, wobei der Durchgang (50), der eine in der Haube (3) ausgebildete Öffnung (51) verlängert, in zwei Öffnungen (52, 53) mündet, die beiderseits der Haube (3) so angeordnet sind, dass diese ein Entweichen des Dampfes ermöglichen.

9. Abdeckung nach Anspruch 8, **dadurch gekennzeichnet, dass** die Leiste (4) eine rohrförmige ausgefüllte Wand (54) umfasst, welche die beiden Öffnungen (52, 53) unter Querung der Öffnung (51), die in der Haube (3) ausgebildet ist, verbindet, derart, dass eine Auslassöffnung für den Dampf gebildet wird.

10. Abdeckung (1) nach einem der Ansprüche 7 bis 9, **dadurch gekennzeichnet, dass** der Durchgang (12, 13, 14, 15, 16, 21) in einem Verlängerungsbereich (7) der Leiste (4) ausgebildet ist, der sich radial über den Umfang (6) der Haube (3) hinaus erstreckt.

11. Abdeckung (1) nach Anspruch 10, in Abhängigkeit von den Ansprüchen 2 bis 6, **dadurch gekennzeichnet, dass** der Durchgang (12, 13) in dem Verlängerungsbereich (7) ausgebildet ist, der radial weiter in das Innere eindringt als die Zentrierungsmittel (8, 9, 10, 11), um so den Auslass des Dampfes zu erlauben.

12. Abdeckung (1) nach Anspruch 10 oder 11, in Abhängigkeit von einem der Ansprüche 2 bis 6, **dadurch gekennzeichnet, dass** der Durchgang (14) durch eine Öffnung gebildet wird, die in dem Verlängerungsbereich (7), radial weiter innen als die Zentrierungsmittel (8, 9, 10, 11), ausgebildet ist, um den Auslass von Dampf zu ermöglichen.

13. Abdeckung (1) nach einem der Ansprüche 10 bis 12, in Abhängigkeit von dem Anspruch 6, **dadurch gekennzeichnet, dass** der Durchgang (16) durch eine Öffnung gebildet wird, die in der hängenden Wand (9) ausgebildet ist.

14. Abdeckung (1) nach einem der Ansprüche 10 bis 13, **dadurch gekennzeichnet, dass** wenigstens ein Durchgang (15) durch einen Vorsprung gebildet wird, der in dem Verlängerungsbereich (7) an einer Seitenwand des Kochartikels (2) ausgebildet ist, die mit der Abdeckung (1) verbunden ist.

15. Abdeckung (1) nach einem der Ansprüche 7 bis 13, **dadurch gekennzeichnet, dass** die Leiste (4) einen flexiblen Flügel umfasst, der dem Durchgang zugeordnet ist, welcher den Auslass von Dampf erlaubt und zwischen einer Öffnungsposition, in welcher dieser den Durchgang freigibt, und einer Schließposition, in welcher dieser jenen abdeckt, beweglich ist.

16. Abdeckung (1) nach einem der Ansprüche 1 bis 15, **dadurch gekennzeichnet, dass** diese Vorspannungsorgane (20, 21) umfasst, die von der Leiste (4) getragen werden.

17. Abdeckung (1) nach Anspruch 16, **dadurch gekennzeichnet, dass** die Vorspannungsorgane (20, 21) in der Dicke der Leiste (4) ausgebildet sind.

18. Abdeckung (1) nach einem der Ansprüche 1 bis 17, **dadurch gekennzeichnet, dass** die Haube (3) ein Gelenk (23) umfasst, das eine Gelenkachse (24) bildet und das sich axial von beiden Seiten bis zur Leiste (4) erstreckt.

19. Einheit umfassend die Abdeckung (1) nach einem der Ansprüche 2 bis 6 und einen Kochartikel (2), den die Abdeckung (1) abdeckt, der daran durch die Zentrierungsmittel (8, 9, 10, 11) zentriert ist.

20. Einheit umfassend die Abdeckung (1) nach wenigstens einem Ansprüche 7 bis 15 und einen Kochartikel (2), den die Abdeckung (1) abdeckt, dessen Durchgang (13, 14, 15, 16, 50) dann eine Kommunikation zwischen dem Inneren des Kochartikels und der Umgebung sicherstellt.
